(19) Europäisches Patentamt
European Patent Office
Office européen des brevets

(11) **EP 2 449 055 B1**

(12) **EUROPEAN PATENT SPECIFICATION**

(45) Date of publication and mention of the grant of the patent:
**14.06.2017 Bulletin 2017/24**

(21) Application number: **10731879.2**

(22) Date of filing: **01.07.2010**

(51) Int Cl.:
*C09K 11/77* (2006.01)       *B41M 3/14* (2006.01)
*D21H 21/40* (2006.01)       *G01N 21/62* (2006.01)
*G06K 19/14* (2006.01)       *G07D 7/12* (2016.01)

(86) International application number:
**PCT/US2010/040711**

(87) International publication number:
**WO 2011/002960 (06.01.2011 Gazette 2011/01)**

(54) **Authentication System**

Authentifizierungssystem

Système d'authentification

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **02.07.2009 US 222524 P**

(43) Date of publication of application:
**09.05.2012 Bulletin 2012/19**

(73) Proprietor: **SICPA HOLDING SA**
**1008 Prilly (CH)**

(72) Inventors:
 • **HAUBRICH, Scott**
   **Albuquerque**
   **NM 87122 (US)**
 • **SHAH, Jainisha**
   **Rio Rancho**
   **NM 87124 (US)**
 • **NOAILLES, Liam**
   **Lakewood**
   **CO 80228 (US)**
 • **DARSEY, Gary**
   **Albuquerque**
   **NM 87122 (US)**
 • **EINHORN, Richard**
   **Albuquerque**
   **NM 87122 (US)**
 • **BREWSTER, James**
   **Rio Rancho**
   **NM 87133 (US)**

(74) Representative: **Hoffmann Eitle**
**Patent- und Rechtsanwälte PartmbB**
**Arabellastraße 30**
**81925 München (DE)**

(56) References cited:
**WO-A1-2006/005498       US-A1- 2002 130 304**
**US-A1- 2008 299 559**

 • **Hongliang Zhu ET AL: "High-Brightness LaPO 4 :Ce 3+ , Tb 3+ Nanophosphors: Reductive Hydrothermal Synthesis and Photoluminescent Properties", JOURNAL OF THE AMERICAN CERAMIC SOCIETY., vol. 91, no. 5, 1 May 2008 (2008-05-01), pages 1682-1685, XP055257923, US ISSN: 0002-7820, DOI: 10.1111/j.1551-2916.2008.02320.x**

**Description**

<u>FIELD</u>

This invention relates to a system for authenticating and differentiating between a series of articles.

<u>BACKGROUND</u>

Phosphors are compositions that are capable of emitting useful quantities of radiation in the visible, infrared and/or ultraviolet spectrums upon excitation of the phosphor compound by an external energy source. Due to this property, phosphor compounds have long been utilized in cathode ray tube (CRT) screens for televisions and similar devices, as taggants for authenticating documents and products, and as luminescent coatings in fluorescent lamps, x-ray scintillators, light emitting diodes, and fluorescent paints. Typically, inorganic phosphor compounds include a host lattice containing a small amount of an emitter or dopant ion.

When used in security applications, phosphor compositions are applied to articles to be authenticated and some basic property of the phosphor, generally the wavelength of the emitted radiation, is monitored by a detector to provide an indication or "tag" of whether an article being tested in genuine. In some applications, it is necessary to differentiate between a series of tagged articles and, although this can be achieved by applying different phosphor compositions which emit radiation of different wavelengths, this has the disadvantage of requiring a monitoring system with multiple detectors.

To address this problem, an authentication system has now been developed in which the property of the phosphor being monitored to differentiate between different tagged articles is the decay profile of the emission from the phosphor. This is achieved by adding to the phosphor composition a predetermined amount of a decay modifying component effective to alter the rate of decay of the radiation emitted by the phosphor. In this way, by varying the amount of the decay modifying component added to the composition, it is possible to produce a set of phosphor compositions with different, controlled rates of decay of the radiation emitted by the compositions. Provided the wavelength of the radiation emitted by the phosphor is substantially unaffected by the addition of the decay modifying component, a single detector can be used to differentiate between articles tagged with the different phosphor compositions.

In this respect it is of course known that the presence of impurities can affect, and in particular can significantly reduce, the luminescent efficiency of phosphors. See, for example, the Phosphor Handbook, edited by Shionoya et al., CRC Press, 1999, pages 325 to 327. However, for this reason, it is normally accepted in the phosphor art that the impurity level of components used to produce phosphor compositions should be reduced to below 5 ppm.

In addition, U.S. Patent No. 5,424,006 discloses a phosphorescent phosphor comprising a matrix expressed by $MAl_2O_4$ in which M is at least one metal element selected from a group consisting of calcium, strontium, and barium, wherein 0.001 % to 10% of europium is doped to said matrix expressed by $MAl_2O_4$ as an activator, and wherein 0.001% to 10% of at least one element selected from the group consisting of lanthanum, cerium, praseodymium, neodymium, samarium, gadolinium, dysprosium, holmium, erbium, thulium, ytterbium, lutetium, tin and bismuth is doped to said matrix expressed by $MAl_2O_4$ as a co-activator, in terms of mol % relative to the metal element expressed by M. The co-activator appears to increase luminance of afterglow of the phosphorescent phosphor, and also increases the decay time constant of the phosphor.

<u>SUMMARY</u>

The invention resides in a system for authenticating and differentiating between a series of articles, the system comprising a plurality of phosphor compositions capable of emitting radiation in response to excitation by photons of a given energy, each phosphor composition being associated with a different article in use and comprising:

(a) a host lattice;
(b) a dopant; and
(c) a decay modifying component different from said dopant and said host lattice and effective to alter the rate of decay of the radiation emitted by the phosphor composition, wherein each phosphor composition employs the same host lattice, dopant and decay modifying component but each phosphor composition contains a different amount of said decay modifying component so that each phosphor composition has its own unique radiation decay rate.

<u>BRIEF DESCRIPTION OF THE DRAWINGS</u>

Figure 1 is graph showing how the intensity of the emission of a phosphor varies with time in response to excitation by, and then removal of, an external energy source.

Figures 2 to 7 are graphs of decay constant, $\tau$, against amount of added decay modifying component for the phosphor compositions of Examples 1 to 6, respectively.

Figures 8 and 9 are further graphs of decay constant, $\tau$, against amount of added decay modifying component for the phosphor composition of Example 1.

Figures 10 to 16 are graphs of initial emission intensity against amount of added decay modifying component for the phosphor compositions of Examples 1 to 6, respectively.

Figures 17 to 18 are further graphs of initial emission intensity against amount of added decay modifying component for the phosphor composition of Example 1.

## DETAILED DESCRIPTION OF THE EMBODIMENTS

Inorganic phosphor compositions generally comprise a host lattice, often formed of a transition metal oxide, sulfide, oxysulfide, fluoride, silicate, aluminate, borate, or phosphate (crystalline or glass), and a dopant or emitter ion, often formed of a lanthanide element, arranged so that when the phosphor composition is excited by an external energy source, the phosphor emits radiation over a particular range or ranges of the visible, infrared and/or ultraviolet spectrums. On removal of the external energy source, the radiation emitted by the phosphor decays exponentially according to the following equation:

$$I = A_0 e^{-(\text{time}/\tau)} + B$$

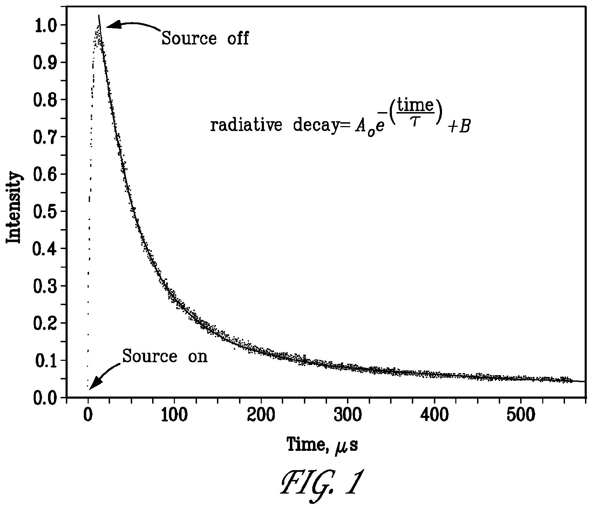

where I is the intensity of the emitted radiation, $\tau$ is the decay constant and $A_0$ and B are further constants. This form of radioactive decay from a phosphor is illustrated by Figure 1.

Described herein is a phosphor composition which, in addition to the host lattice and one or more dopant ions, comprises a predetermined amount of decay modifying component which is different from the dopant and host lattice and is deliberately added to the phosphor composition to alter, in a controlled and measurable manner, the rate of decay of the radiation emitted by the phosphor composition.

Although, the decay modifying component can in some cases decrease the rate of decay of the radiation emitted by the phosphor composition, in general the decay modifying component used herein increases the rate of radiation decay in proportion to the amount of the decay modifying component added to the phosphor. Thus, by adding the decay modifying component to the phosphor composition in a carefully controlled and predetermined amount, the rate of decay of the radiation emitted by the phosphor composition can be adjusted and controlled. In this respect, the decay modifying component used in the present phosphor composition is completely different from the impurities which are known to affect the luminescent efficiency of phosphors, in that the decay modifying component is added deliberately in a controlled and predetermined amount to the other components of the phosphor composition, normally after ensuring each component is substantially free (99%+) of impurities.

Depending on the particular material employed, the decay modifying component is generally added to the phosphor composition in an amount between 1 and 10,000 parts, such as between 1 and 1,000 parts, for example between 1 and 100 parts, per million of the overall composition. This amount is in addition to any decay modifying impurities that may inherently be contained by the phosphor composition. The amount of decay modifying component added to the phosphor composition is generally selected so that the rate of decay of the radiation emitted by the phosphor containing is controllably adjusted, and normally increased, by 1 to 99%, such as from 30 to 90%, for example from 50 to 60 %, as compared with the rate of decay of the radiation emitted by the phosphor in the absence of said decay modifying component. The decay rate is generally determined as time required for the emission from the phosphor to decay from a fixed amount, typically in the range of 30 to 40%, such as 36.8%, of its maximum value.

Generally, the decay modifying component is selected so that the wavelength of the radiation emitted by the dopant ion is substantially unaffected by the addition of the decay modifying component. This can be achieved by ensuring that the decay modifying component does not alter the excited state of the emission. Typically, the decay modifying component is not excited by the external energy source used to excite the dopant or emitter ion.

Since the rate of decay of the radiation emitted by the present phosphor composition can be controlled by the choice of the particular decay modifying component and the amount of decay modifying component added to the composition, the decay rate as well as the wavelength of the radiation emitted by the phosphor can be used as a characteristic identifying feature of the phosphor. Thus, where the phosphor is to be used in a security application, the radiation decay rate can be employed to indicate or "tag" the authenticity of a particular article. This facility is particularly useful when it is necessary not only to authenticate a single article, but to differentiate between different authentic articles, for example banknotes of different denominations. In this case, by varying the amount of the decay modifying component added to a given host lattice/dopant combination, it is possible to produce a series of phosphors or tags each having its own unique radiation decay rate. The different decay rates can then be used to identify the different authentic articles. Moreover, provided the wavelength of the radiation emitted by each phosphor is substantially unaffected by the decay modifying component, a single detector can be used to differentiate between the articles tagged with the different phosphor compositions.

The decay modifying material generally also alters, and typically reduces, the absolute value of the maximum intensity of the radiation emitted by the phosphor composition in response to the excitation radiation. Thus in another embodiment, the variation in the maximum value of the emitted radiation can be used as control variable to differentiate between a plurality of phosphor compositions which have been doped with different amounts of the decay modifying material.

## Phosphor Composition

As with any doped inorganic phosphor, the identity of the host lattice is critical to the performance of the present phosphor composition because it influences the electronic environment of the dopant atom(s) and the non-radiative decay pathways for electronic excited states. In principal, any host lattice may be used herein if it is possible to incorporate at least one type of luminescent dopant atom into said host lattice to result in a luminescent composition. Examples of host lattices which may be useful include compounds comprising a cation containing at least one element selected from Groups 2, 3 12, and 13 of the Periodic Table and the lanthanide elements, and an anion containing at least one element selected from Groups 13, 14, 15, 16 and 17 of the Periodic Table. Typically, the or each cation element is selected from yttrium, lanthanum, gadolinium, lutetium, zinc, magnesium, calcium, strontium, and barium and the or each anion element is selected from boron, aluminum, gallium, silicon, germanium, nitrogen, phosphorous, arsenic, oxygen, sulfur, selenium, fluorine, chlorine, bromine, iodine. Particular lattice materials suitable for use in the present phosphor composition include yttrium oxide, yttrium phosphate, yttrium sulfides, yttrium oxysulfides, yttrium aluminates, such as $Y_3Al_5O_{12}$ (YAG), $YAlO_3$ (YAP) and $Y_4Al_2O_9$ (YAM), and yttrium silicon nitrides and oxynitrides, such as $YSi_3N_5$ and $Y_2Si_{11}N_{20}O$, erbium aluminates, such as $Er_3Al_5O_{12}$ and $ErAlO_3$ (YAP), barium magnesium aluminates, gadolinium oxide and gadolinium gallates, such as $Gd_3Ga_5O_{12}$, lanthanum oxide, lanthanum phosphate, neodymium phosphate, zirconia, ceria, zinc silicates, and strontium silicates. Mixed lattice compositions can also be employed.

The dopant employed herein is typically an ion of at least one lanthanide element, in which the oxidation state of the or each lanthanide element dopant is preferably such that the ion has no d electrons. Suitable lanthanide elements for the dopant ion comprise cerium, praseodymium, neodymium, samarium, europium, terbium, dysprosium, holmium, erbium, thulium and ytterbium. Other elements that can be used as the dopant ion in the present phosphor composition include magnesium, copper, silver, nickel, tin, lead, and zinc. Generally, the dopant is present as an oxygen-containing compound, such as a metal oxide, a silicate, borate, phosphate, oxysulfide or aluminate.

The amount of dopant present in the luminescent composition is not narrowly defined and generally can range from about 0.1 to about 99 mole%, such as from about 1 to about 80 mole %, for example from about 5 to about 70 mole%, conveniently from about 5 to about 25 mole% of the total luminescent composition.

The decay modifying material employed in the present phosphor composition can also be a lanthanide element or compound thereof, such as dysprosium, samarium, praseodymium, thulium, cerium, holmium, neodymium, erbium, europium, ytterbium and mixtures thereof. Other suitable decay modifying components include iron, cobalt, chromium, copper, nickel, ruthenium, titanium, magnesium, calcium, aluminum, silver, zinc, zirconium, gallium and mixtures and compounds thereof. Sodium silicate can also be used as there or one decay modifying component.

The amount of decay modifying material present in the luminescent composition generally ranges from about 1 to about 10,000 parts, such as from about 1 to about 1,000 parts, for example from about 1 to about 100 parts, per million parts of the total luminescent composition.

Although there is considerable amount of overlap between the materials suitable for use as the host lattice, dopant and decay modifying component of the present phosphor compositions, it will be appreciated that in any given composition different elements and/or compounds will be employed as the individual components of the composition. In other words, the host lattice will be different from the dopant and the decay modifying component and the dopant will be different from the decay modifying component.

In one preferred embodiment, the present phosphor composition is in the form of a powder batch comprising particles having a small average size, generally with each of the host lattice, dopant ion and decay modifying material being present in some or all of the individual particles of the batch. Although the preferred average size of the phosphor particles will vary according to the application of the phosphor powder, the average particle size of the phosphor particles is less than about 10 $\mu$m. For most applications, the average particle size is preferably less than about 5 $\mu$m, more preferably less than about 3 $\mu$m, such as from about 0.1 $\mu$m to about 3 $\mu$m, typically about 2 $\mu$m. As used herein, the average particle size is the weight average particle size.

The powder batch of phosphor particles also has a narrow particle size distribution, such that the majority of particles are substantially the same size. Preferably, at least about 90 weight percent of the particles and more preferably at least about 95 weight percent of the particles are not larger than twice the average particle size. Thus, when the average particle size is about 2 μm, it is preferred that at least about 90 weight percent of the particles are not larger than 4 μm and it is more preferred that at least about 95 weight percent of the particles are not larger than 4 μm. Further, it is preferred that at least about 90 weight percent of the particles, and more preferably at least about 95 weight percent of the particles, are not larger than about 1.5 times the average particle size. Thus, when the average particle size is about 2 μm, it is preferred that at least about 90 weight percent of the particles are not larger than about 3 μm and it is more preferred that at least about 95 weight percent of the particles are not larger than about 3 μm.

The phosphor particles can be substantially single crystal particles or may be comprised of a number of crystallites. Preferably, the phosphor particles are highly crystalline with the average crystallite size approaching the average particle size such that the particles are mostly single crystals or are composed of only a few large crystals. The average crystallite size of the particles is preferably at least about 25 nanometers, more preferably is at least about 40 nanometers, even more preferably is at least about 60 nanometers and most preferably is at least about 80 nanometers. In one embodiment, the average crystallite size is at least about 100 nanometers. As it relates to particle size, the average crystallite size is preferably at least about 20 percent, more preferably at least about 30 percent and most preferably is at least about 40 percent of the average particle size. Such highly crystalline phosphors are believed to have increased luminescent efficiency and brightness as compared to phosphor particles having smaller crystallites.

The phosphor particles are also preferably substantially spherical in shape. That is, the particles are not jagged or irregular in shape. Spherical particles are particularly advantageous because they are able to disperse and coat an article more uniformly with a reduced average thickness. Although the particles are substantially spherical, the particles may become faceted as the crystallite size increases and approaches the average particle size.

The individual components of the phosphor particles advantageously have a high degree of purity, that is, a low level of impurities. Impurities are those materials that are not intended in the final product. Thus, the dopant ion and the decay modifying component are not considered as impurities. The level of impurities in the present phosphor powders is preferably not greater than about 1 atomic percent, more preferably not greater than about 0.1 atomic percent, and even more preferably not greater than about 0.01 atomic percent.

According to one example, the phosphor particles are provided with a surface coating that substantially encapsulates the outer surface of the particles. Such coatings can assist in reducing degradation of the phosphor material due to moisture or other influences and can also create a diffusion barrier such that activator ions cannot transfer from one particle to another, thereby altering the luminescence characteristics. Coatings can also control the surface energy levels of the particles.

The coating can be a metal, metal oxide or other inorganic compound such as a metal sulfide, or can be an organic compound. For example, a metal oxide coating can advantageously be used, such as a metal oxide selected from the group consisting of $SiO_2$, $MgO$, $Al_2O_3$, $ZnO$, $SnO_2$ or $In_2O_3$. Particularly preferred are coatings are $SiO_2$ and $Al_2O_3$. Semiconductive oxide coatings such as $SnO_2$ or $In_2O_3$ can also be advantageous in some applications due to the ability of the coating to absorb secondary electrons that are emitted by the phosphor. Metal coatings, such as copper, can be useful for phosphor particles used in direct current electroluminescent applications In addition, phosphate coatings, such as zirconium phosphate or aluminum phosphate, can also be advantageous for use in some applications.

The coating should encapsulate the entire particle, but should be sufficiently thin that the coating does not interfere with light transmission. Preferably, the coating has an average thickness of at least about 2 nanometers, more preferably at least about 5 nanometers, but not greater than about 200 nanometers, more preferably not greater than about 100 nanometers, and even more preferably not greater than about 50 nanometers. In one embodiment, the coating has a thickness of from about 2 to about 50 nanometers, such as from about 2 to about 10 nanometers. Further, the particles can include more than one coating substantially encapsulating the particles to achieve the desired properties.

The coating, either particulate or non-particulate, can also include a pigment or other material that alters the light characteristics of the phosphor. Red pigments can include compounds such as the iron oxides ($Fe_2O_3$), cadmium sulfide compounds (CdS) or mercury sulfide compounds (HgS). Green or blue pigments include cobalt oxide (CoO), cobalt aluminate ($CoAl_2O_4$) or zinc oxide (ZnO). Pigment coatings are capable of absorbing selected wavelengths of light leaving the phosphor, thereby acting as a filter to improve the color contrast and purity.

In addition, the phosphor particles can be coated with an organic compound, such as PMMA (polymethylmethacrylate), polystyrene or similar organic compounds, including surfactants that aid in the dispersion and/or suspension of the particles in a flowable medium. The organic coating is preferably not greater than about 100 nanometers thick and is substantially dense and continuous about particle. The organic coatings can advantageously prevent corrosion of the phosphor particles, especially in electroluminescent lamps, and also can improve the dispersion characteristics of the particles in a paste or other flowable medium.

The coating can also be comprised of one or more monolayer coatings, such as from about 1 to 3 monolayer coatings. A monolayer coating is formed by the reaction of an organic or an inorganic molecule with the surface of the phosphor particles to form a coating layer that is essentially one molecular layer thick. In particular, the formation of a monolayer coating by reaction of the surface of the phosphor powder with a functionalized organosilane such as halo- or amino-silanes, for example hexamethyldisilazane or trimethylsilylchloride, can be used to modify and control the hydrophobicity and hydrophilicity of the phosphor powders. Metal oxides (e.g. ZnO or $SiO_2$) or metal sulfides (e.g. $Cu_2S$) can also be formed as monolayer coatings. Monolayer coatings can allow for greater control over the dispersion characteristics of the phosphor powder in a wide variety of paste compositions and other flowable mediums.

The monolayer coatings may also be applied to phosphor powders that have already been coated with an organic or inorganic coating, thus providing better control over the corrosion characteristics (through the use of a thicker coating) as well as dispersibility (through the use of a monolayer coating) of the phosphor powder.

## Production of the Phosphor Composition

The phosphor composition can be produced by any known method that generates spherical particles of the required size and size distribution. Suitable methods include spray pyrolysis and pyrolysis using a flame reactor, as discussed in more detail below. In addition, a modification of these methods can be used in a gas dispersion process to produce nanoparticles dispersed in a matrix.

In spray pyrolysis, a precursor medium is produced which comprises a precursor to at least one the components of the phosphor composition dissolved or suspended in a liquid carrier, while the remaining components, if any, of the composition are dispersed as particles in the liquid carrier. The liquid carrier is then atomized to produce an aerosol comprising droplets dispersed and suspended in a carrier gas. The aerosol is then heated at a temperature of at least 200 °C, generally from about 300 °C to about 1500 °C, in order to: (1) remove at least a portion of the liquid carrier in the droplets; and (2) convert the or each precursor to the corresponding component of the powder batch.

By the term "precursor" is meant any compound capable of being chemically converted under the conditions employed in the spray pyrolysis process to at least one component of the final powder batch. Suitable precursors therefore include inorganic salts of the elements contained in the powder batch, such as nitrates, sulfates and chlorides.

Generally, where the precursor medium contains solid particles of at least one component of the final powder batch, the solid particles are arranged to have a particle size of between about 0.1 micron and about 100 micron, such as between about 1 micron and about 10 micron.

The precursor medium can be converted into aerosol form using any suitable device that disperses liquid into droplets, such as for example, a spray nozzle. Examples of suitable spray nozzles include ultrasonic spray nozzles, multi-fluid spray nozzles and pressurized spray nozzles. Ultrasonic spray nozzles generate droplets of liquid by using piezoelectric materials that vibrate at ultrasonic frequencies to break up a liquid into small droplets. Pressurized nozzles use pressure and a separator or screen in order to break up the liquid into droplets. In some cases, pressurized nozzles may involve use of some vapor that is generated from the liquid itself in order to pressurize and break up the liquid into droplets. One advantage of using ultrasonic and pressurized nozzles is that an additional fluid is not required to generate liquid droplets. This may be useful in situations where the precursor dissolved in the liquid vehicle is sensitive and/or incompatible with other common fluids used in multi-fluid spray nozzles.

In addition to the use of a spray nozzle for dispersing the liquid medium, any other suitable device or apparatus for generating disperse droplets of liquid may be used. One example of a device that is useful in generating droplets of liquid is an ultrasonic generator. An ultrasonic generator uses transducers to vibrate liquids at very high frequencies which break up the liquid into droplets. One example of an ultrasonic generator that is useful in the present process is disclosed in U.S. Patent No. 6,338,809, incorporated herein by reference in its entirety. Another example of a device that is useful in generating droplets of liquid is a high energy atomizer such as those used in carbon black production.

Generally, whatever method is employed to atomize the precursor medium, the aerosol produced is arranged to have an average droplet size between about 1 and about 100 microns, such as between about 3 and about 50 microns, for example between about 5 and about 30 micron. In certain cases, it may be desirable to introduce one or more precursors and/or components of the final powder batch to the spray conversion reactor as dry powders.

Further details of the spray pyrolysis process can be found in U.S. Patent No. 6,180,029, and in U.S. Patent Application Publication No. 20070096057, the entire contents of which are hereby incorporated herein as if set forth herein in full. See also U.S. Patent Application Publication Nos. 20060166057, 20060165898, 20060165910; and 20060162497, the entireties of which are incorporated herein by reference.

In the flame reactor process, a nongaseous precursor of at least one component of the desired particulate composition is introduced into a flame reactor heated by at least one flame. The nongaseous precursor is introduced into the flame reactor in a very hot zone, also referred to herein as a primary zone, that is sufficiently hot to cause the component of the nongaseous precursor to be transferred into the gas phase of a flowing stream in the flame reactor, followed by a particle nucleation from the gas phase. In some embodiments, the temperature in at least some portion of this primary zone, and sometimes only in the hottest part of the flame, is high enough so that substantially all of materials flowing through that portion of the primary zone are in the gas phase. The component of the nongaseous precursor may enter the gas phase by any mechanism. For example, the nongaseous precursor may simply vaporize, or the nongaseous precursor may decompose and the component enter the gas phase as part of a decomposition product. Eventually, however, the component then leaves the gas phase as particle nucleation and growth occurs. Removal of the component from the gas phase may involve simple condensation as the temperature cools or may include additional reactions involving the component that results in a non-vapor reaction product. In addition to this primary zone where the component of the nongaseous precursor is transferred into the gas phase, the flame reactor may also include one or more subsequent zones for growth or modification of the nanoparticulates. In most instances, the primary zone will be the hottest portion within the flame reactor.

One suitable flame reactor is disclosed in U.S. Patent Application Publication No. 2006/0162497, published on July 27, 2006, the entire contents of which are incorporated herein by reference. Using a flame reactor, conversion temperatures in excess of 1000°C, such as from about 1200°C to about 3000°C can be attained.

In some cases, it is desirable to produce the luminescent composition as nanoparticles that are maintained in a dispersed state by a matrix, since in this way the tendency for the nanoparticles to agglomerate is obviated or alleviated. This is conveniently achieved by a gas dispersion process in which a flowing gas dispersion is generated such that dispersion includes a disperse phase dispersed in and suspended by a gas phase. As generated, the gas dispersion has a disperse phase of droplets of a precursor medium comprising a liquid vehicle and at least two precursors, at least one of the precursors being a precursor to one or more components of the luminescent composition and at least one of the precursors being a precursor to the matrix. After generating the gas dispersion, the gas dispersion is processed in a particle forming step, in which liquid is removed from the droplets of the precursor medium and particles are formed that include nanoparticulates dispersed in the matrix.

Although the phosphor powders produced by the foregoing methods have good crystallinity, it may be desirable to increase the crystallinity (average crystallite size) after production. Thus, the powders can be annealed (heated) for an amount of time and in a preselected environment to increase the crystallinity of the phosphor particles. Increased crystallinity can advantageously yield an increased brightness and efficiency of the phosphor particles. If such annealing steps are performed, the annealing temperature and time should be selected to minimize the amount of interparticle sintering that is often associated with annealing. According to one embodiment, the phosphor powder is preferably annealed at a temperature of from about 600°C to about 1600°C, more preferably from about 1200°C to about 1500°C. The annealing can be effected by a variety of methods, including heating in a crucible, in a fluidized bed reactor, agitating while heating, and the like. The annealing time is preferably not more than about 2 hours and can be as little as about 1 minute. The oxygen-containing powders are typically annealed in an inert gas, such as argon or in an oxygen-containing gas, such as air.

The particulate phosphor compositions produced by the methods described above can advantageously be used to form flowable media,

## Uses of the Phosphor Composition

The phosphor compositions described herein can be employed to produce security features on articles such as credit cards, driver's licenses, passports, checks, currency, bonds, tickets, tax stamps, banknotes, cigarette pack tear tapes, thin films (e.g., for shrink wrap applications), security thread, ID cards and the like. As used herein, the term "security feature" means a feature that is placed on an article (e.g., a label, a document such as a passport, check, bond, banknote, currency, or ticket), directly or indirectly, for the purpose of authenticating the article. The phosphor composition can also be incorporated directly into packaging to authenticate packaged products.

This is conveniently achieved by combining the phosphor composition with a liquid to form a flowable medium, such as an ink, paste or slurry, and then applying a coating comprising the composition onto a substrate. In addition to the phosphor composition, such a flowable medium may comprise one or more of the following: a liquid vehicle, an anti-agglomeration agent, one or more additives (e.g., surfactants, polymers, biocides, thickeners, etc.), other particulates (metallic and/or non-metallic), and other components. The medium may be deposited onto a substrate by virtually any printing process, such as ink-jet printing, screen printing, intaglio printing, roll printing, lithographic printing and gravure printing.

In the following examples, all the phosphor compositions are produced by spray pyrolysis of an aqueous precursor solution containing salts of the various metals and/or oxides present in the phosphor using the apparatus disclosed in U.S. Patent No. 6,180,029. The aqueous precursor solution enters the atomizer at a temperature of 32 °C and the atomized precursor is transported through the pyrolysis furnace by a carrier gas, typically air, flowing at 45 SLPM. The furnace temperature is 800 °C and the pyrolyzed product is quenched with ambient air at a flow rate of 400 SCFM so that quenched product has a temperature of 80 to 110 °C. After quenching, the powdered product is collected and then heat treated in crucibles in 5 to 10 gm batches according to the following schedule shown in Table 1.

**Table 1**

| Heating Temperature, °C | Time |
|---|---|
| 0-500 | 1 hour 35 min |
| 500-1000 | 4 hour 10 min |
| 1000-1350 | 5 hour 50 min |
| 1350 | 20 hour |
| 1380-800 | 5 hour |
| 800-460 | 4 hour |
| 460-RT | Natural cool |

The base phosphor compositions summarized in Table 2 were produced to test the influence of the addition of decay modifying materials on the radioactive emission properties of the phosphors.

**Table 2**

| Host Lattice | Emitter 1 | Emitter Mol% | Emitter 2 | Emitter 2 Mol% | Conc. % | Excitation wavelength, nm | Emission wavelength, nm |
|---|---|---|---|---|---|---|---|
| $LaPO_4$ | Yb | 35.00 | n/a | n/a | 4.0 | 940 | 950-1080 |
| $Gd_2O_3$ | Yb | 10.00 | n/a | n/a | 10.0 | 940 | 950-1120 |
| $YPO_4$ | Eu | 35.00 | n/a | n/a | 4.0 | 375 | 575-730 |
| $Y_2O_3$ | Eu | 10.00 | n/a | n/a | 10.0 | 375 | 575-730 |
| YAG | Yb | 10.00 | n/a | n/a | 4.5 | 940 | 950-1200 |
| $YPO_4$ | Ho | 10.00 | Er | 10.00 | 4.0 | 525 | 600-860 |
| $YPO_4$ | Yb | 25.00 | n/a | n/a | 7.5 | 940 | 950-1200 |
| $Y_2O_3$ | Yb | 10.44 | Er | 5.08 | 10.0 | 940 | 500-600 |

## Examples 1 to 8

Each of the phosphor compositions shown in Table 1 is doped with various amounts from 25 to 200 ppm of the one or more of the decay modifying materials selected from dysprosium, samarium, praseodymium, thulium, neodymium and iron to produce the modified compositions shown in Table 3.

**Table 3**

| Host Lattice | Modifier 1 | Modifier 1 levels | Modifier 2 | Modifier 2 levels | Modifier 3 | Modifier 3 levels |
|---|---|---|---|---|---|---|
| $LaPO_4$:Yb | Sm | 50, 100 | Pr | 50, 100 | Tm | 50, 100 |
| $Gd_2O_3$:Yb | Dy | 50, 100 | Pr | 50, 100 | NA | 50, 100 |
| $YPO_4$:Eu | Dy | 50, 100, 200 | Sm | 50, 100, 200 | Fe | 50, 100, 200 |
| $Y_2O_3$:Eu | Sm | 50, 100 | Pr | 50, 100 | Nd | 50, 100 |
| YAG:Yb | Nd | 50, 100 | Dy | 50, 100 | | |
| $YPO_4$:Ho, Er | Dy | 50, 100 | Nd | 50, 100 | | |
| $YPO_4$:Yb | Dy | 50, 200 | | | | |
| $Y_2O_3$:Yb, Er | Dy + Tm | 25+25 | Pr + Sm | 25+25 | Dy + Sm | 25+25 |

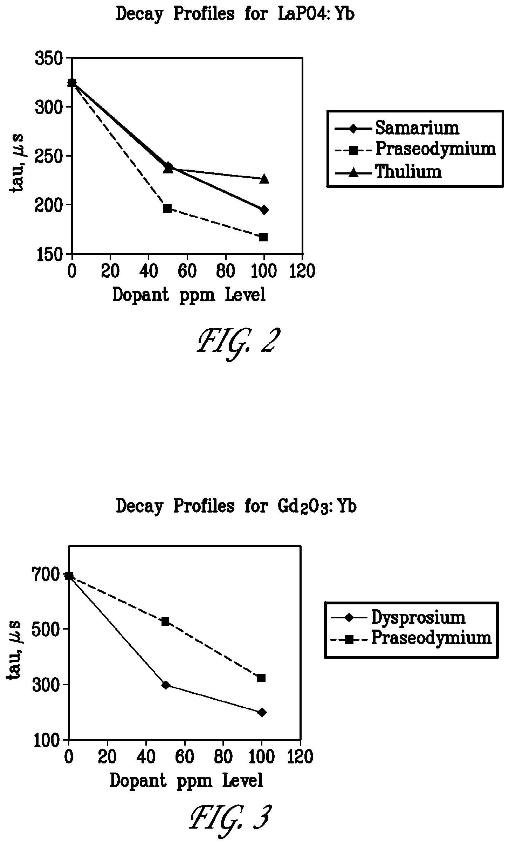

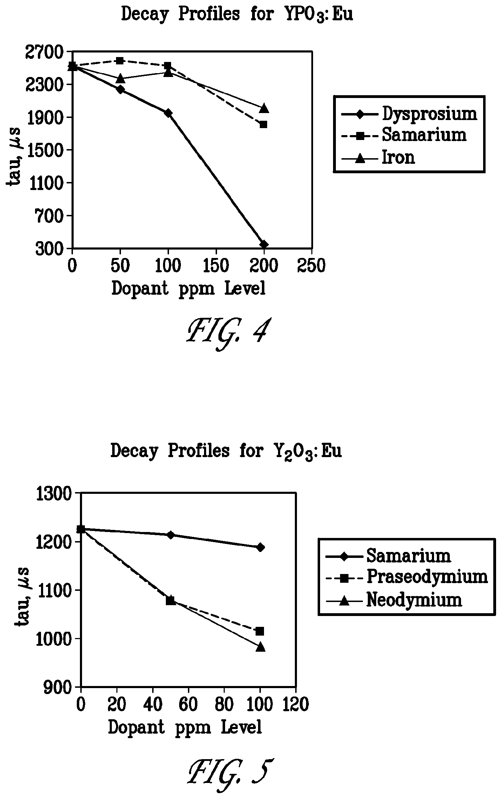

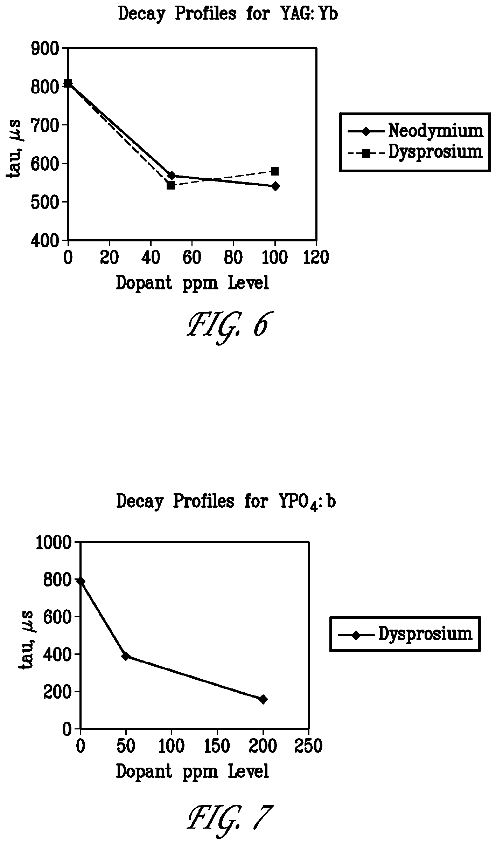

The decay profile of each of the doped and undoped phosphor compositions is measured continuously using a PTI laser system. The resulting curve is fit with a single order exponential. The parameter $\tau$ is the response variable representing the time when the decay has reached 36.8% of its maximum height. The excitation wavelength is fixed (varies by composition, see Table 2), as well as the measured emission wavelength (varies by composition, see Table 2). The results are summarized in Table 4 and Figures 2 to 7 and show that the addition of the dopants changes the decay rates of the phosphors by amounts dependent on the identity of the dopant and the amount of dopant added.

It will also be seen that for two of the host lattices then effect of the dopant addition is not measurable. The $YPO_4$:Ho,Er composition has too fast of a decay to measure on the PTI laser. For the $Y_2O_3$:Yb,Er composition, the emission in the area of interest is not intense enough to measure.

**Table 4**

| Host Lattice | Emitter | Modifier | ppm Level | tau ($\mu$s) |
|---|---|---|---|---|
| $LaPO_4$ | Yb | none | 0 | 325.3 |
| $LaPO_4$ | Yb | Sm | 50 | 238.9 |
| $LaPO_4$ | Yb | Sm | 100 | 194.5 |
| $LaPO_4$ | Yb | Pr | 50 | 196.0 |
| $LaPO_4$ | Yb | Pr | 100 | 166.9 |
| $LaPO_4$ | Yb | Tm | 50 | 236.9 |
| $LaPO_4$ | Yb | Tm | 100 | 225.8 |
| $Gd_2O_3$ | Yb | none | 0 | 690.2 |
| $Gd_2O_3$ | Yb | Dy | 50 | 297.7 |
| $Gd_2O_3$ | Yb | Dy | 100 | 201.6 |
| $Gd_2O_3$ | Yb | Pr | 50 | 524.2 |
| $Gd_2O_3$ | Yb | Pr | 100 | 320.8 |
| $YPO_4$ | Eu | none | 0 | 2516.1 |
| $YPO_4$ | Eu | Dy | 50 | 2233.4 |
| $YPO_4$ | Eu | Dy | 100 | 1957.3 |
| $YPO_4$ | Eu | Dy | 200 | 347.8 |
| $YPO_4$ | Eu | Sm | 50 | 2584.9 |
| $YPO_4$ | Eu | Sm | 100 | 2516.4 |
| $YPO_4$ | Eu | Sm | 200 | 1794.8 |
| $YPO_4$ | Eu | Fe | 50 | 2375.2 |
| $YPO_4$ | Eu | Fe | 100 | 2446.7 |
| $YPO_4$ | Eu | Fe | 200 | 2007.6 |
| $Y_2O_3$ | Eu | none | 0 | 1227.6 |
| $Y_2O_3$ | Eu | Sm | 50 | 1214.6 |
| $Y_2O_3$ | Eu | Sm | 100 | 1189.6 |
| $Y_2O_3$ | Eu | Pr | 50 | 1077.6 |
| $Y_2O_3$ | Eu | Pr | 100 | 1013.3 |
| $Y_2O_3$ | Eu | Nd | 50 | 1079.9 |
| $Y_2O_3$ | Eu | Nd | 100 | 984.4 |
| $YPO_4$ | Yb | none | 0 | 790.1 |
| $YPO_4$ | Yb | Dy | 50 | 390.5 |
| $YPO_4$ | Yb | Dy | 200 | 156.6 |

(continued)

| Host Lattice | Emitter | Modifier | ppm Level | tau ($\mu$s) |
|---|---|---|---|---|
| YAG | Yb | none | 0 | 809.9 |
| YAG | Yb | Nd | 50 | 567.9 |
| YAG | Yb | Nd | 100 | 542.2 |
| YAG | Yb | Dy | 50 | 542.6 |
| YAG | Yb | Dy | 100 | 578.5 |
| $YPO_4$ | Ho, Er | none | 0 | Decay is too fast to measure on the PTI |
| $YPO_4$ | Ho, Er | Dy | 50 | |
| $YPO_4$ | Ho, Er | Dy | 100 | |
| $YPO_4$ | Ho, Er | Nd | 50 | |
| $YPO_4$ | Ho, Er | Nd | 100 | |
| $Y_2O_3$ | Yb, Er | none | 0 | Not intense enough to measure |
| $Y_2O_3$ | Yb, Er | Dy, Tm | 50 | |
| $Y_2O_3$ | Yb, Er | Pr, Sm | 50 | |
| $Y_2O_3$ | Yb, Er | Dy, Sm | 50 | |

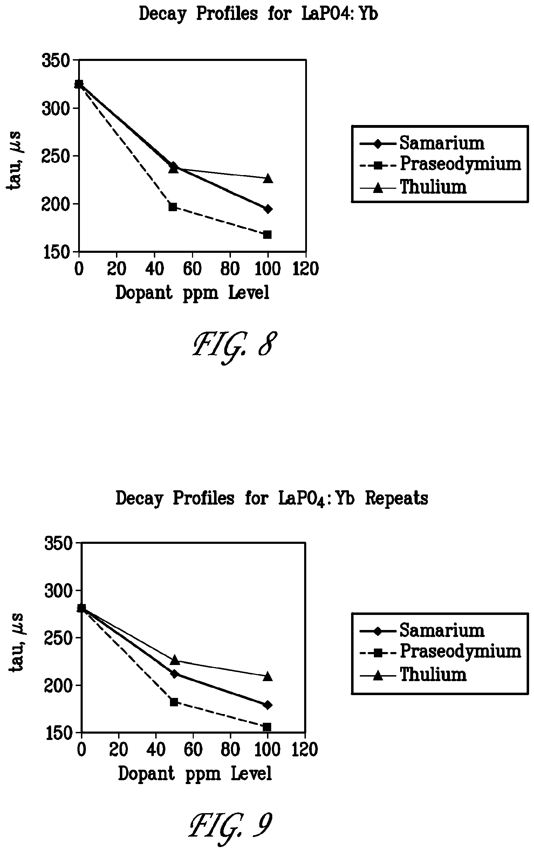

To confirm that the results are reliable, repeat measurements are completed on LaPO$_4$/Yb composition of Example 1. The results are shown in Table 5 and Figures 8 and 9. Although the $\tau$ values in the two experiments are not identical, they follow the same general trend.

**Table 5**

| Host Lattice | Emitter | Modifier | ppm Level | tau ($\mu$s) | repeat tau ($\mu$s) |
|---|---|---|---|---|---|
| $LaPO_4$ | Yb | none | 0 | 325.3 | 282.2 |
| $LaPO_4$ | Yb | Sm | 50 | 238.9 | 212.3 |
| $LaPO_4$ | Yb | Sm | 100 | 194.5 | 178.7 |
| $LaPO_4$ | Yb | Pr | 50 | 196.0 | 182.1 |
| $LaPO_4$ | Yb | Pr | 100 | 166.9 | 154.8 |
| $LaPO_4$ | Yb | Tm | 50 | 236.9 | 226.4 |
| $LaPO_4$ | Yb | Tm | 100 | 225.8 | 209.8 |

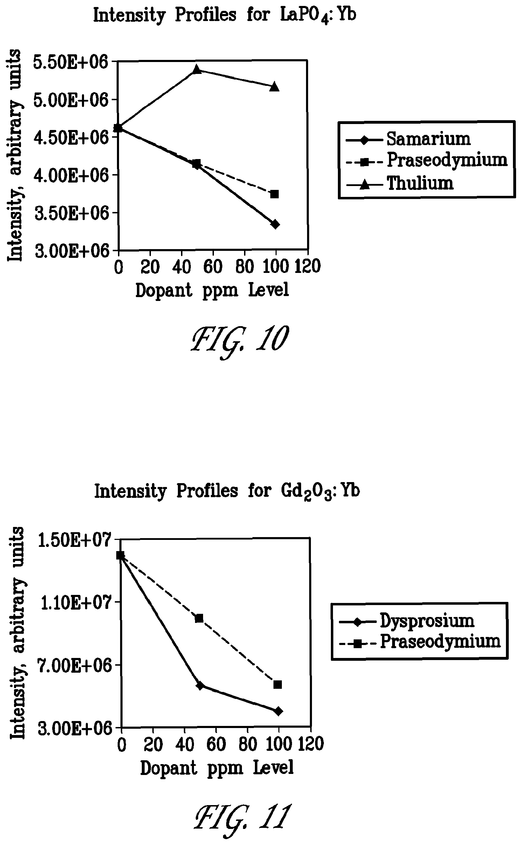

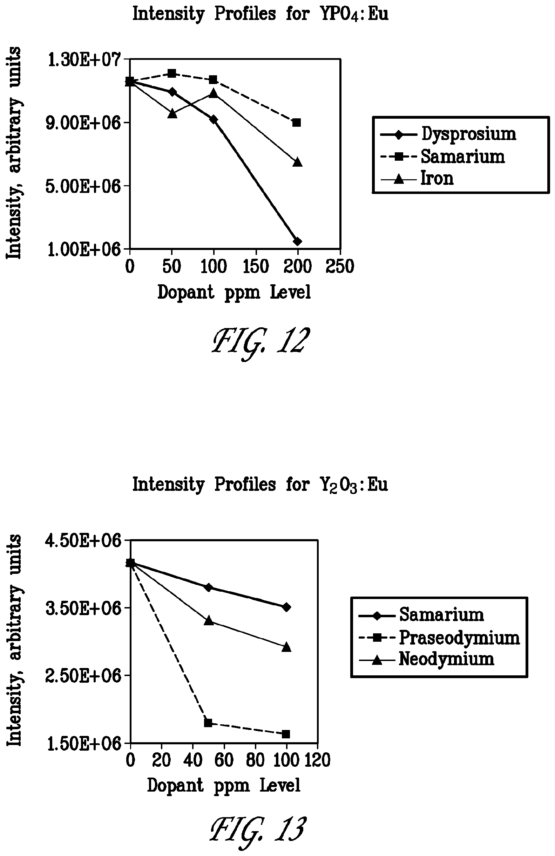

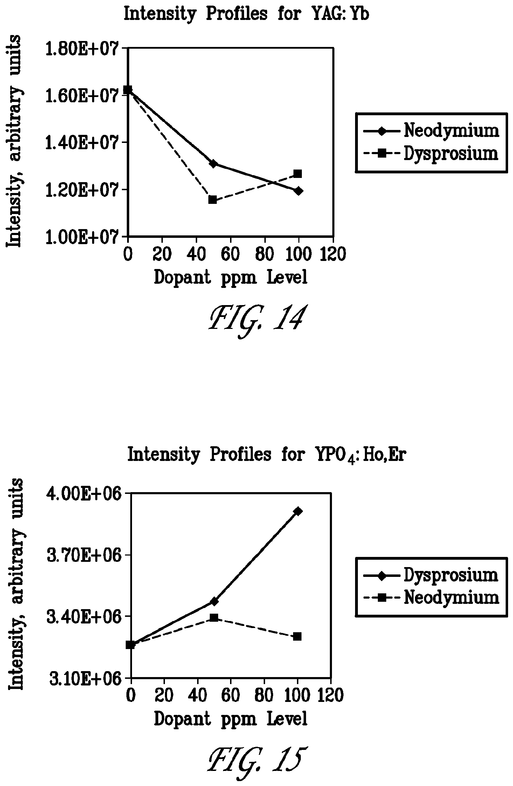

Measurements of the maximum intensity of the emission radiation from each of the doped and undoped phosphor compositions are also performed on the PTI laser instrument. The results are normalized to a relative intensity, which is unitless. The results are summarized in the Table 6 and Figures 10 to 16 and show that the maximum intensity varies, generally decreases, as the dopant level increases.

**Table 6**

| Host Lattice | Emitter | Modifier | ppm Level | Intensity (unitless) |
|---|---|---|---|---|
| $LaPO_4$ | Yb | none | 0 | 4625040 |
| $LaPO_4$ | Yb | Sm | 50 | 4115790 |
| $LaPO_4$ | Yb | Sm | 100 | 3324900 |
| $LaPO_4$ | Yb | Pr | 50 | 4128510 |
| $LaPO_4$ | Yb | Pr | 100 | 3731120 |

(continued)

| Host Lattice | Emitter | Modifier | ppm Level | Intensity (unitless) |
|---|---|---|---|---|
| $LaPO_4$ | Yb | Tm | 50 | 5380050 |
| $LaPO_4$ | Yb | Tm | 100 | 5154450 |
| $Gd_2O_3$ | Yb | none | 0 | 14000200 |
| $Gd_2O_3$ | Yb | Dy | 50 | 5566630 |
| $Gd_2O_3$ | Yb | Dy | 100 | 3964800 |
| $Gd_2O_3$ | Yb | Pr | 50 | 9898360 |
| $Gd_2O_3$ | Yb | Pr | 100 | 5606950 |
| $YPO_4$ | Eu | none | 0 | 11565300 |
| $YPO_4$ | Eu | Dy | 50 | 10961700 |
| $YPO_4$ | Eu | Dy | 100 | 9220210 |
| $YPO_4$ | Eu | Dy | 200 | 1507470 |
| $YPO_4$ | Eu | Sm | 50 | 12039700 |
| $YPO_4$ | Eu | Sm | 100 | 11674700 |
| $YPO_4$ | Eu | Sm | 200 | 8949990 |
| $YPO_4$ | Eu | Fe | 50 | 9599030 |
| $YPO_4$ | Eu | Fe | 100 | 10885400 |
| $YPO_4$ | Eu | Fe | 200 | 6479480 |
| $Y_2O_3$ | Eu | none | 0 | 4162070 |
| $Y_2O_3$ | Eu | Sm | 50 | 3804690 |
| $Y_2O_3$ | Eu | Sm | 100 | 3513500 |
| $Y_2O_3$ | Eu | Pr | 50 | 1793420 |
| $Y_2O_3$ | Eu | Pr | 100 | 1630210 |
| $Y_2O_3$ | Eu | Nd | 50 | 3322770 |
| $Y_2O_3$ | Eu | Nd | 100 | 2918420 |
| $YPO_4$ | Yb | none | 0 | 17280200 |
| $YPO_4$ | Yb | Dy | 50 | 8405220 |
| $YPO_4$ | Yb | Dy | 200 | 3598700 |
| YAG | Yb | none | 0 | 16199600 |
| YAG | Yb | Nd | 50 | 13093100 |
| YAG | Yb | Nd | 100 | 11951300 |
| YAG | Yb | Dy | 50 | 11515600 |
| YAG | Yb | Dy | 100 | 12639900 |
| $YPO_4$ | Ho, Er | none | 0 | 3257370 |
| $YPO_4$ | Ho, Er | Dy | 50 | 3475780 |
| $YPO_4$ | Ho, Er | Dy | 100 | 3911210 |
| $YPO_4$ | Ho, Er | Nd | 50 | 3387520 |
| $YPO_4$ | Ho, Er | Nd | 100 | 3302670 |
| $Y_2O_3$ | Yb, Er | none | 0 | 489309 |

(continued)

| Host Lattice | Emitter | Modifier | ppm Level | Intensity (unitless) |
|---|---|---|---|---|
| $Y_2O_3$ | Yb, Er | Dy, Tm | 50 | 129639 |
| $Y_2O_3$ | Yb, Er | Pr, Sm | 50 | 105627 |
| $Y_2O_3$ | Yb, Er | Dy, Sm | 50 | 80951 |

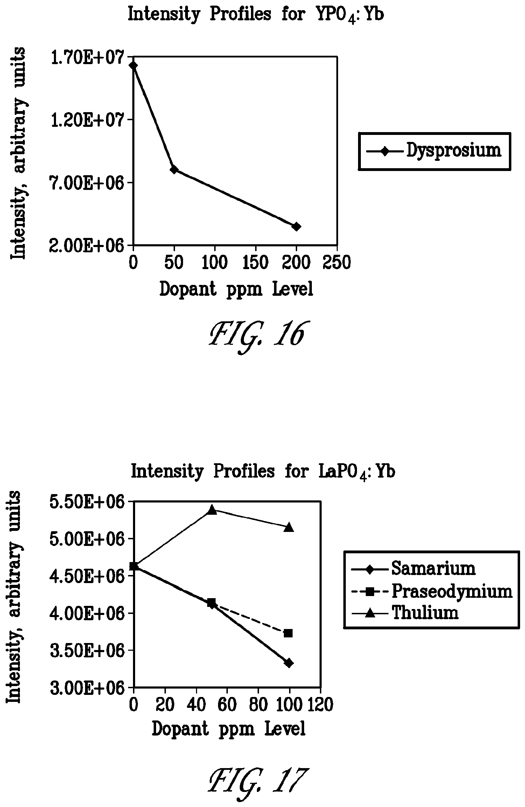

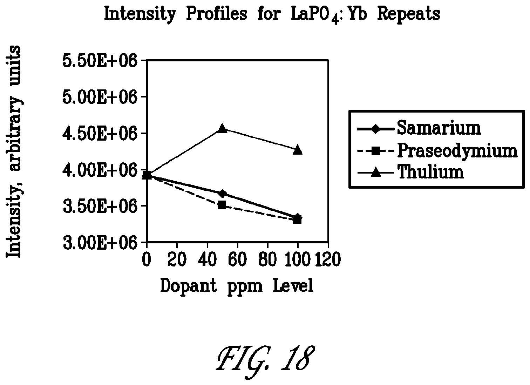

Again, to confirm that the results are reliable, repeat measurements are completed on $LaPO_4$/Yb composition of Example 1. The results are shown in Table 7 and Figures 17 and 18.

**Table 7**

| Host Lattice | Emitter | Modifier | ppm Level | Intensity (unitless) | Repeat Intensity (unitless) |
|---|---|---|---|---|---|
| $LaPO_4$ | Yb | none | 0 | 4625040 | 3927940 |
| $LaPO_4$ | Yb | Sm | 50 | 4115790 | 3679160 |
| $LaPO_4$ | Yb | Sm | 100 | 3324900 | 3331120 |
| $LaPO_4$ | Yb | Pr | 50 | 4128510 | 3507340 |
| $LaPO_4$ | Yb | Pr | 100 | 3731120 | 3297370 |
| $LaPO_4$ | Yb | Tm | 50 | 5380050 | 4558780 |
| $LaPO_4$ | Yb | Tm | 100 | 5154450 | 4280230 |

Again, although the intensity values are not indentical, they follow the same general trend.

## Claims

1. A system for authenticating and differentiating between a series of articles, the system comprising a plurality of phosphor compositions capable of emitting radiation in response to excitation by photons of a given energy, each phosphor composition being associated with a different article in use and comprising:

   (a) a host lattice;
   (b) a dopant; and
   (c) a decay modifying component different from said dopant and said host lattice, wherein each phosphor composition employs the same host lattice, dopant and decay modifying component but each phosphor composition contains a different amount of said decay modifying component so that each phosphor composition has its own unique radiation decay rate.

2. The system of claim 1 wherein decay modifying component is added to each phosphor composition in a predetermined amount between 1 and 10,000, preferably between 1 and 1,000, most preferably between 1 and 100, parts per million of the composition.

3. The system of any one of claims 1 or 2 wherein the host lattice, dopant and decay modifying component of each phosphor composition are present in a single particle.

4. The use of the system according to any of claims 1 to 3 for authenticating and differentiating between a series of articles.

5. A method of using the system according to any of claims 1 to 3 comprising the following steps:

   i) preparing the plurality of phosphor compositions,
   ii) associating each of the phosphor compositions with a different article
   iii) authenticating and differentiating between the articles using the unique radiation decay rates of the phosphor compositions.

**EP 2 449 055 B1**

## Patentansprüche

1. System zum Authentifizieren von und Unterscheiden zwischen einer Reihe von Artikeln, wobei das System mehrere Leuchtstoffzusammensetzungen umfasst, die als Reaktion auf Anregung durch Photonen einer gegebenen Energie Strahlung abgeben können, wobei jede Leuchtstoffzusammensetzung einem anderen Artikel in der Verwendung zugeordnet ist und Folgendes umfasst:

   (a) ein Wirtsgitter;
   (b) ein Dotiermittel und
   (c) eine Zerfall modifizierende Komponente, die sich vom Dotiermittel und vom Wirtsgitter unterscheidet, wobei jede Leuchtstoffzusammensetzung das gleiche Wirtsgitter, das gleiche Dotiermittel und die gleiche Zerfall modifizierende Komponente verwendet, jede Leuchtstoffzusammensetzung jedoch eine unterschiedliche Menge an Zerfall modifizierender Komponente enthält, so dass jede Leuchtstoffzusammensetzung ihre eigene eindeutige Strahlungszerfallsrate aufweist.

2. System nach Anspruch 1, wobei jeder Leuchtstoffzusammensetzung Zerfall modifizierende Komponente in einer vorbestimmten Menge zwischen 1 und 10.000, vorzugsweise zwischen 1 und 1000, besonders bevorzugt zwischen 1 und 100, Teile pro Million der Zusammensetzung hinzugegeben wird.

3. System nach einem der Ansprüche 1 und 2, wobei das Wirtsgitter, das Dotiermittel und die Zerfall modifizierende Komponente jeder Leuchtstoffzusammensetzung in einem einzigen Partikel vorliegen.

4. Verwendung des Systems nach einem der Ansprüche 1 bis 3 zum Authentifizieren von und Unterscheiden zwischen einer Reihe von Artikeln.

5. Verfahren zur Verwendung des Systems nach einem der Ansprüche 1 bis 3, das die folgenden Schritte umfasst:

   i) Herstellen der mehreren Leuchtstoffzusammensetzungen,
   ii) Zuordnen jeder der Leuchtstoffzusammensetzungen zu einem unterschiedlichen Artikel,
   iii) Authentifizieren von und Unterscheiden zwischen den Artikeln mithilfe der eindeutigen Strahlungszerfallsraten der Leuchtstoffzusammensetzungen.

## Revendications

1. Système d'authentification et de différenciation d'une série d'articles, le système comprenant une pluralité de compositions de luminophore susceptibles d'émettre un rayonnement en réponse à une excitation par des photons d'une énergie donnée, chaque composition de luminophore étant associée à un article différent à l'usage et comprenant :

   (a) un réseau hôte ;
   (b) un dopant ; et
   (c) un constituant modifiant la décroissance différent dudit dopant et dudit réseau hôte, dans lequel chaque composition de luminophore emploie les mêmes réseau hôte, dopant et constituant modifiant la décroissance, mais chaque composition de luminophore contient une quantité différente dudit constituant modifiant la décroissance de telle sorte que chaque composition de luminophore a son propre taux de décroissance de rayonnement unique.

2. Système de la revendication 1 dans lequel le constituant modifiant la décroissance est ajouté à chaque composition de luminophore dans une quantité prédéterminée entre 1 et 10 000, de préférence entre 1 et 1000, idéalement entre 1 et 100 parties par million de la composition.

3. Système de l'une quelconque des revendications 1 ou 2 dans lequel le réseau hôte, le dopant et le constituant modifiant la décroissance de chaque composition de luminophore sont présents dans une seule individuelle.

4. Utilisation du système selon l'une quelconque des revendications 1 à 3 pour l'authentification et la différenciation d'une série d'articles.

**5.** Procédé d'utilisation du système selon l'une quelconque des revendications 1 à 3 comprenant les étapes suivantes :

i) préparer la pluralité de compositions de luminophore,
ii) associer chacune des compositions de luminophore à un article différent, et
iii) authentifier et différencier les articles en utilisant les taux de décroissance de rayonnement uniques des compositions de luminophore.

$$\text{radiative decay} = A_o e^{-\left(\frac{\text{time}}{\tau}\right)} + B$$

*FIG. 1*

Decay Profiles for LaPO4: Yb

*FIG. 2*

Decay Profiles for $Gd_2O_3$: Yb

*FIG. 3*

Decay Profiles for YPO₃:Eu

FIG. 4

Decay Profiles for Y₂O₃:Eu

FIG. 5

Decay Profiles for YAG: Yb

*FIG. 6*

Decay Profiles for YPO$_4$: b

*FIG. 7*

Decay Profiles for LaPO4: Yb

*FIG. 8*

Decay Profiles for LaPO$_4$: Yb Repeats

*FIG. 9*

Intensity Profiles for LaPO$_4$:Yb

FIG. 10

Intensity Profiles for Gd$_2$O$_3$:Yb

FIG. 11

Intensity Profiles for YPO$_4$:Eu

*FIG. 12*

Intensity Profiles for Y$_2$O$_3$:Eu

*FIG. 13*

Intensity Profiles for YAG: Yb

*FIG. 14*

Intensity Profiles for YPO$_4$: Ho,Er

*FIG. 15*

**Intensity Profiles for YPO$_4$:Yb**

*FIG. 16*

**Intensity Profiles for LaPO$_4$:Yb**

*FIG. 17*

Intensity Profiles for LaPO$_4$:Yb Repeats

FIG. 18

## REFERENCES CITED IN THE DESCRIPTION

**Patent documents cited in the description**

- US 5424006 A
- US 6338809 B
- US 6180029 B
- US 20070096057 A
- US 20060166057 A
- US 20060165898 A
- US 20060165910 A
- US 20060162497 A

**Non-patent literature cited in the description**

- **SHIONOYA et al.** Phosphor Handbook. CRC Press, 1999, 325-327